# EUROPEAN PATENT APPLICATION

(11) **EP 4 827 164 A1**
(43) Date of publication of application: **21.10.2026**
(21) Application number: 24910970.3
(22) Date of filing: 20.12.2024
(51) Int. Cl.: H04W 28/06

(54) **COMMUNICATION METHOD AND APPARATUS**

(30) Priority: 29.12.2023 CN 202311869897
(71) Applicant: Huawei Technologies Co., Ltd., Shenzhen, Guangdong 518129 (CN)
(72) Inventor: LI, Bingzhao, Shenzhen, Guangdong 518129 (CN); CHANG, Junren, Shenzhen, Guangdong 518129 (CN); LIU, Nannan, Shenzhen, Guangdong 518129 (CN); FAN, Qiang, Shenzhen, Guangdong 518129 (CN)
(74) Representative: Huawei European IPR
(86) International application number: PCT/CN2024/141029
(87) International publication number: WO 2025/140041

(57) **Abstract**

This application provides a communication method, used to clear invalid data in time. The method includes: A communication apparatus receives a first data packet and a second data packet, and discards the first data packet based on the second data packet. In this application, the communication apparatus may clear the invalid data based on the received data packet, without waiting until a timer corresponding to the invalid data expires to clear the invalid data. This avoids a problem that a delay of sending valid data is increased due to sending of the invalid data.

## Description

This application claims priority to Chinese Patent Application No. 202311869897.7, filed with the China National Intellectual Property Administration on December 29, 2023 and entitled "COMMUNICATION METHOD AND APPARATUS", which is incorporated herein by reference in its entirety.

### TECHNICAL FIELD

This application relates to the communications field, and in particular, to a data transmission method and apparatus.

### BACKGROUND

In an image quality enhancement and degradation technology based on an artificial intelligence (artificial intelligence, AI) model, a cloud-based game enhancement technology, and cloud-based photo processing, a transmission object (for example, an AI model, three-dimensional (three dimensions, 3D) space model data, or photo source data) including a large amount of data needs to be transmitted within a specific time period. Uplink transmission is used as an example. Regardless of whether the photo source data or the three-dimensional (three dimensions, 3D) space model data is uploaded, an application layer of a terminal first sends the data to an access layer of the terminal, and the access layer sends the data to an access network device. If there is a new model to be transmitted, the application layer generates new service data and sends the data to the access layer. For example, in a service data sending process in a scenario 1, service data in a scenario 2 also needs to be sent due to a scenario change. In this case, the application layer chooses to stop sending remaining data of the service data in the scenario 1 and start sending the service data in the second scenario. That is, when new model data is generated, the application layer stops sending remaining data of old model data, causing the old model data to become invalid. However, some old model data has been sent to the access layer. For the old model data that has been sent to the access layer, a discard timer is started based on a packet delay budget (packet delay budget, PDB) requirement. The old model data that has been sent to the access layer is still sent before the discard timer expires. However, in this case, the old model data that has been sent to the access layer is already invalid, and continuing to send the old model data that has been sent to the access layer increases a sending delay of the new model data.

### SUMMARY

This application provides a communication method and a communication apparatus, to reduce a data sending delay.

According to a first aspect, a communication method is provided, applied to a first communication apparatus, where the method includes: The first communication apparatus receives a first data packet; the first communication apparatus receives a second data packet; and the first communication apparatus discards the first data packet based on the second data packet.

In this manner, the first communication apparatus discards the first data packet based on the second data packet, without waiting until a discard timer expires to discard the first data packet. This helps reduce a data transmission delay and reduce power consumption of the first communication apparatus.

In a possible implementation, data included in the first data packet belongs to a first data sequence, data included in the second data packet belongs to a second data sequence, and that the first communication apparatus discards the first data packet based on the second data packet is specifically: discarding the first data packet based on a fact that the second data sequence is different from the first data sequence.

In this manner, if the first communication apparatus determines that the second data sequence to which the data in the received data packet belongs is a new data sequence, the first communication apparatus discards the first data packet corresponding to the first data sequence that is originally to be transmitted.

In a possible implementation, data included in the first data packet belongs to a first data sequence, data included in the second data packet belongs to a second data sequence, the second data packet carries first indication information, and the first indication information indicates the second data sequence. The first communication apparatus discards the first data packet based on the first indication information. In this manner, the second data packet carries the first indication information, and the first indication information indicates that the second data sequence is a new data sequence, or the first indication information indicates a start identifier of a new data sequence. The first communication apparatus learns, via the first indication information, that the second data packet arrives, and therefore discards the first data packet.

In a possible implementation, the second data packet carries second indication information, the second indication information indicates to discard the first data packet, and the first communication apparatus discards the first data packet based on the second indication information. In this manner, the second data packet explicitly carries an indication indicating that the first communication apparatus needs to discard the first data packet, and the first communication apparatus may discard the first data packet based on the second data packet.

In a possible implementation, data included in the first data packet belongs to a first data sequence, data included in the second data packet belongs to a second data sequence, the second indication information indicates the first data sequence, and the first data packet is discarded based on the first data sequence. In this manner, the second data packet explicitly carries an indication of the first data sequence corresponding to the first data packet, and the first communication apparatus may determine, based on the data sequence indicated in the second data packet, to discard the data packet corresponding to the data sequence.

In a possible implementation, the second indication information indicates a sequence identifier of the first data sequence.

In a possible implementation, the method further includes: receiving first information, where the first information indicates that the first data packet is allowed to be discarded based on the second data packet. In this manner, whether the first communication apparatus is allowed to implement the foregoing function of discarding the first data packet based on the second data packet may be designed as a configurable feature, thereby improving communication flexibility.

In a possible implementation, the first data packet belongs to a first quality of service flow QoS flow, the second data packet belongs to a second QoS flow, and discarding the first data packet based on the second data packet is specifically: clearing the first data packet of the first QoS flow based on the second QoS flow.

In a possible implementation, the first QoS flow is associated with the second QoS flow. In this manner, a binding relationship between the first QoS flow and the second QoS flow is designed, so that the first communication apparatus can clear data of another QoS flow after data of the QoS flow arrives.

In a possible implementation, the method further includes: The first communication apparatus receives first configuration information, where the first configuration information indicates that the first QoS flow and the second QoS flow are in a mutual clearance relationship.

In a possible implementation, the first QoS flow and the second QoS flow are respectively mapped to different data radio bearers DRBs.

In a possible implementation, discarding the first data packet based on the second data packet is specifically: discarding, by the first communication apparatus, the first data packet when a time interval between an arrival time of the second data packet at an access layer and an arrival time of the first data packet at the access layer is greater than a threshold.

In a possible implementation, the first data packet includes data that has been processed through a DRB and data that has not been processed through the DRB, and that the first communication apparatus discards the first data packet is specifically: The first communication apparatus discards the data that has not been processed through the DRB in the first data packet.

In a possible implementation, the first communication apparatus determines, based on the second data packet, that a discard timer of the first data packet expires, and discards the first data packet, or discards, based on the second data packet, all data of a data radio bearer DRB to which the first data packet is mapped.

In a possible implementation, time at which the first data packet arrives at an access layer is earlier than that of the second data packet, or generation time of the data included in the first data packet is earlier than that of the data included in the second data packet.

In a possible implementation, the first communication apparatus may be a terminal, or a module (for example, a chip) located in a terminal device, or the first communication apparatus may be an access network device, or a module (for example, a chip) located in an access network device.

In a possible implementation, the first communication apparatus is an access layer of a terminal.

According to a second aspect, this application provides a communication apparatus, including a unit or a module configured to perform the method according to the first aspect.

In a possible implementation, the communication apparatus is a chip system.

In a possible manner, the communication apparatus may perform the method according to the first aspect or the third aspect. A function of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effect thereof, refer to the method according to the first aspect and the beneficial effect thereof. Repeated parts are not described again.

According to a third aspect, this application provides a communication apparatus. The communication apparatus includes a processor, and when the processor invokes a computer program in a memory, the method according to the first aspect and the possible implementations thereof are performed.

In a possible implementation, the communication apparatus further includes the memory. The memory and the processor are coupled to each other. Optionally, the memory and the processor are integrated together.

In a possible implementation, the communication apparatus further includes a transceiver. The transceiver is configured to send or receive data and/or signaling.

According to a fourth aspect, this application provides a communication apparatus. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the first aspect and the possible implementations thereof through a logic circuit or by executing code instructions.

According to a fifth aspect, this application provides a computer-readable storage medium. The storage medium stores a computer program or instructions, and when the computer program or the instructions are executed by a communication apparatus, the method according to the first aspect and the possible implementations thereof are implemented.

According to a sixth aspect, this application provides a computer program or a computer program product, including code or instructions. When the code or the instructions are run on a computer, the computer is enabled to perform the method according to any one of the first aspect to the fourth aspect and the possible implementations thereof.

According to a seventh aspect, a communication method is provided, including: An application layer of a terminal device sends a first data packet and a second data packet to an access layer of the terminal device, and the access layer of the terminal device discards the first data packet based on the second data packet.

According to an eighth aspect, a communication method is provided, including: A core network or a server sends a first data packet and a second data packet to an access network device, and the access network device discards the first data packet based on the second data packet.

According to a ninth aspect, a communication method is provided, including: An application layer of a terminal generates a first data packet and a second data packet, and sends the first data packet and the second data packet to an access layer of a terminal. The access layer of the terminal discards the first data packet based on the second data packet.

### BRIEF DESCRIPTION OF DRAWINGS

FIG. 1 is a diagram of a communication system according to an embodiment of this application;
FIG. 2 is a diagram of a communication method according to an embodiment of this application;
FIG. 3 is a diagram of another communication method according to an embodiment of this application;
FIG. 4 is a diagram of a communication apparatus according to an embodiment of this application; and
FIG. 5 is a diagram of another communication apparatus according to an embodiment of this application.

### DESCRIPTION OF EMBODIMENTS

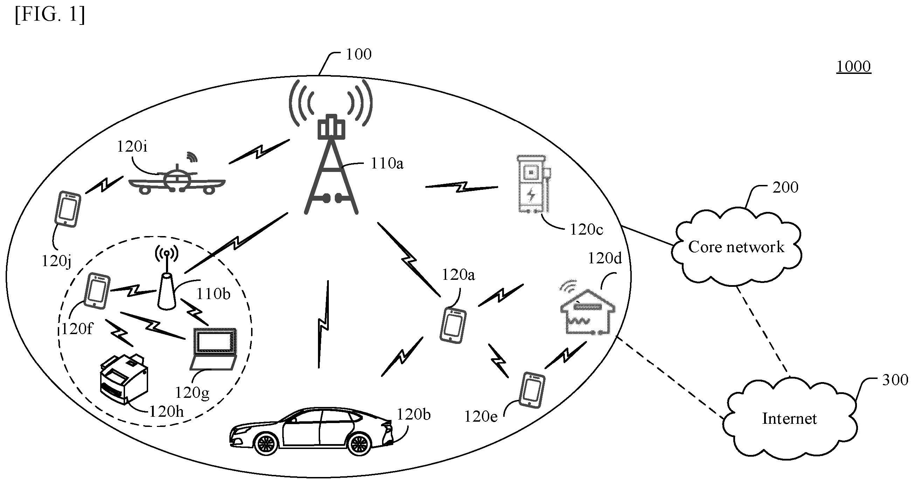

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

A RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have a different name. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses an example in which the access network device serves as a RAN node for description.

The terminal is a device having a wireless transceiver function, and may send a signal to the access network device, or receive a signal from the access network device. The terminal may alternatively be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The access network device and the terminal may be in fixed locations, or may be movable. The access network device and the terminal may be deployed on land, including being indoor, being outdoor, being hand-held, or being vehicle-mounted; may be deployed on water; or may be deployed on an airplane, a balloon, and an artificial satellite. Application scenarios of the access network device and the terminal are not limited in embodiments of this application.

Roles of the access network device and the terminal may be relative. For example, a helicopter or an uncrewed aerial vehicle 120i in FIG. 1 may be configured as a mobile access network device. For a terminal 120j accessing the radio access network 100 through 120i, the terminal 120i is an access network device. However, for an access network device 110a, 120i is a terminal. In other words, 110a communicates with 120i by using a radio air interface protocol. Certainly, 110a and 120i may alternatively communicate with each other by using an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the terminal.

Communication between an access network device and a terminal, between access network devices, or between terminals may be performed through a licensed spectrum, an unlicensed spectrum, or both a licensed spectrum and an unlicensed spectrum; and communication may be performed through a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, functions of the access network device may be alternatively executed by a module (for example, a chip) in the access network device, or may be alternatively executed by a control subsystem including the functions of the access network device. The control subsystem including the functions of the access network device may be a control center in the foregoing application scenarios such as the smart grid, the industrial control, the smart transportation, and the smart city. The function of the terminal may be performed by a module (for example, a chip or a modem) in the terminal, or may be performed by an apparatus including the function of the terminal.

In this application, the access network device sends a downlink signal or downlink information to the terminal. The downlink information is carried on a downlink channel. The terminal sends an uplink signal or uplink information to the access network device. The uplink information is carried on an uplink channel. To communicate with the access network device, the terminal needs to establish a wireless connection in a cell controlled by the access network device. The cell that establishes the wireless connection to the terminal is referred to as a serving cell of the terminal. When communicating with the serving cell, the terminal is further interfered by a signal from a neighboring cell.

Before specific implementations are described, some terms or scenarios in this application are described in detail.

### (1) Quality of service (quality of service, QoS) flow (flow)

The QoS flow is a user service data flow that uses a QoS parameter, and is used to transmit data and implement interaction between a user and a data network. The QoS flow in this application is a channel resource used to transmit, by a vehicle, a data packet having a same or similar QoS requirement, or may have another name, for example, a service flow or a bearer service pipe. A name of the QoS flow is an example. A name of the channel resource having this function is not limited in this application. The core network maps the service to the QoS flow. This process may be referred to as level-1 mapping. After the QoS flow reaches the RAN, the RAN maps the QoS flow to a data radio bearer (data radio bearer, DRB) for transmission. This process may be referred to as level-2 mapping. In other words, the level-1 mapping is performed by the core network, and the level-2 mapping is performed by the radio access network.

### (2) Image quality enhancement and degradation AI model

A principle of this model is that a transmit end uses a quality degradation AI algorithm to perform quality degradation processing on a high-quality or high-resolution image, to obtain a low-quality image. Transmission of the low-quality image can reduce bandwidth consumption. A receive end runs a quality enhancement AI algorithm to perform image enhancement on the low-quality image, to obtain a high-quality image. Because an image type and a scenario often change, the quality degradation AI algorithm often changes. To perform video quality enhancement and degradation AI processing, the receive end needs to dynamically update and download the quality enhancement AI model to match the quality enhancement AI model with the quality degradation AI model.

### (3) Cloud-based game enhancement

A rendering effect of a game on a terminal is usually limited by a rendering algorithm. To obtain a better rendering effect, the terminal may upload to-be-rendered three-dimensional model data and information like a user location and a rendering angle of view to a server. The server renders a data model, and then returns a rendering result to the terminal. The terminal performs post-processing and then displays the result to the user. When the user moves or a map is switched, new 3D model data needs to be uploaded to the server. Generally, a size of the 3D model data to be uploaded by the user ranges from 5 MB to 20 MB. In some scenarios, the size of the 3D model data is about 100 MB.

### (4) Layer

In a communication system, transport network functions are divided into a series of layers for hierarchical description. Each layer is considered to independently produce and forward feature information. For example, the transport network function may include an access layer and an application layer, where the access layer may be further divided into a data link layer and a physical layer.

Communication between the terminal device, the network device, and the server complies with a specific protocol stack architecture. For example, the terminal device sends a data packet to the server by using the network device. The data packet is transmitted sequentially through an application layer, a transport layer, a network layer, an access layer, and a physical layer of the terminal device, and then sequentially through an access layer, a data link layer, and a physical layer of the network device, and finally arrives at a physical layer, a data link layer, a network layer, a transport layer, and an application layer of the server.

The access layer is a protocol of an access technology between the access layer of the terminal and the access network device. The data link layer may be further subdivided into a MAC layer, a radio link control (radio link control, RLC) layer, an SDAP layer, a PDCP layer, and the like. The access layer protocol may also be understood as a manner in which a specific physical medium between the user equipment and infrastructure is used to carry information. For another example, the application layer (Application Layer) is a highest layer of an open system interconnect (Open System Interconnect, OSI) reference model, and is an interface between a computer user, various applications, and a network. A function of the application layer is to directly provide services for a user and complete various tasks that the user wants to complete on the network. Based on works of other layers, the application layer establishes and terminates connections with a user, and implements various network services proposed by a network user and various protocols such as supervision, management, and service required by an application. In addition, the application layer is further responsible for coordinating work between various applications. The application layer provides a user with the following services and protocols: file service, directory service, file transfer service (FTP), remote login service (Telnet), email service (E-mail), printing service, security service, network management service, and database service. The various network services are implemented by different application protocols and programs at this layer. Different network operating systems differ greatly in terms of functions, interfaces, implementation technologies, hardware support, security and reliability, and various application programming interfaces.

Main functions of the application layer include a user interface and implementation of various services. Specifically, in terms of the user interface function, the application layer is a direct interface between a user and a network and between an application and a network, so that the user can interact with the network. In terms of the function of implementing various services, various applications at this layer can complete and implement various services requested by users. Protocols that can be used and supported by the application layer may include a hypertext transfer protocol (hypertext transfer protocol, HTTP), a file transfer protocol (file transfer protocol, FTP), a real-time transport protocol (real-time transport protocol, RTP), and the like.

Protocols that can be used and supported by the transport layer may include a transmission control protocol (transmission control protocol, TCP), a user datagram protocol (user datagram protocol, UDP), and the like. Protocols that can be used and supported by the network layer may include an internet protocol (Internet Protocol, IP) protocol, for example, an IPv4 protocol or an IPv6 protocol. The access layer may include a service data adaptation protocol SDAP layer, a PDCP layer, an RLC layer, a MAC layer, and a physical layer (physical layer, PHY).

### (5) Data packet

The data packet is a unit of data transmission. In addition to data, a data packet may further include an address of a sender and/or an address of a receiver, and/or error control information, for example, an internet protocol (Internet Protocol, IP) data packet or a real-time performance (real-time performance, RTP) management data packet. The data sequence may be understood as a set of a group of data packets that are generated by the application layer and that are logically associated. For example, a set of all data packets generated by the application layer by encoding a 3D model in a rendering scenario may be understood as a data sequence, or a set of all data packets generated by the application layer by encoding an AI model may also be understood as a data sequence.

It can be learned from the foregoing description that, when new model data is generated, the application layer stops sending remaining data of old model data, causing the old model data to become invalid. However, some old model data has been sent to the access layer. For the old model data that has been sent to the access layer, a discard timer is started based on a packet delay budget (packet delay budget, PDB) requirement. The old model data that has been sent to the access layer is still sent before the discard timer expires. However, in this case, the old model data that has been sent to the access layer is already invalid, and continuing to send the old model data that has been sent to the access layer increases a sending delay of the new model data. Alternatively, the application layer generates a group of data under a specific model and sends the group of data to the access layer. However, in a sending process, the user cancels sending of the group of data. In this case, the group of data is also invalid. If the data that has been sent to the access layer is still sent, the access layer increases a large amount of invalid transmission. This causes a waste of resources.

Based on the foregoing analysis, this application provides a communication method, so that the access layer can clear invalid data in time, to reduce a sending delay of the service data.

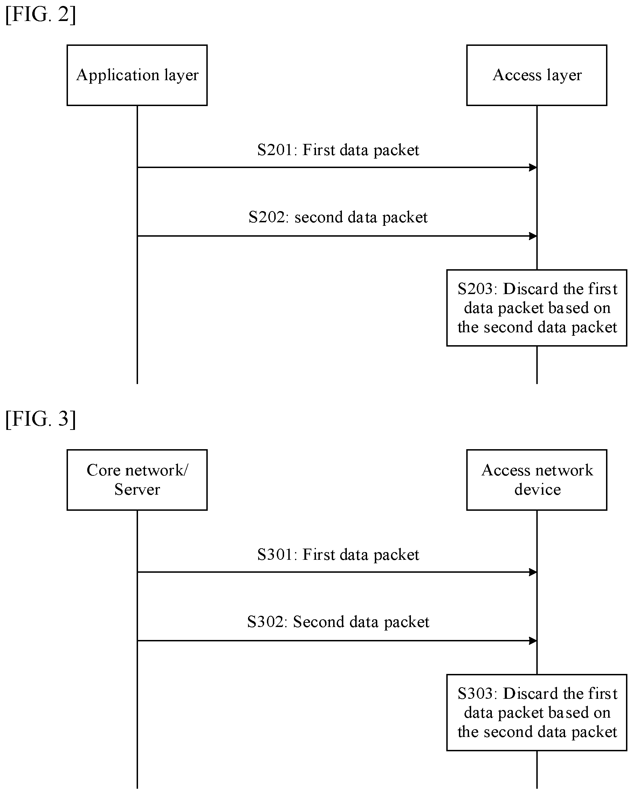

FIG. 2 is a diagram of a communication method according to this application. For uplink transmission, FIG. 2 includes steps S201 to S203. For uplink transmission, an execution entity is the terminal. Inside the terminal, an application layer of the terminal generates information and sends the information to an access layer, and the access layer sends the corresponding information. For example, the access layer sends the corresponding information to an access network device. The application layer may be understood as a unit or module that generates information inside the terminal, and the access layer may be understood as a unit or module that is inside the terminal and that is configured to transmit information to another device.

S201: An access layer receives a first data packet.

Specifically, data included in the first data packet may belong to a first data sequence, or the first data packet may be mapped to a first QoS flow for transmission. The first data sequence may be understood as a set including a group of data packets that are generated by the application layer and that are logically associated, for example, all data packets generated by the application layer by encoding a 3D model in a rendering scenario, or all data packets generated by the application layer by encoding an AI model.

S202: The access layer receives a second data packet.

Specifically, this is similar to the first data packet. Data included in the second data packet may belong to a second data sequence, or the second data packet may be mapped to a second QoS flow for transmission. Optionally, the first data sequence and the second data sequence may be data sequences of different models. The model may be an AI model or a three-dimensional digital physical model. When the first data packet belongs to the first QoS flow and the second data packet belongs to the second QoS flow, in a possible manner, the first QoS flow and the second QoS flow are separately mapped to different DRBs.

In a possible manner, the first data packet is earlier than the second data packet. The following lists several specific forms in which the first data packet is earlier than the second data packet. That is, that the first data packet is earlier than the second data packet in this application may be replaced with one or more of the following descriptions.

Manner 1: Time at which the first data sequence is generated by the application layer is earlier than time at which the second data sequence is generated by the application layer.

For example, the first data sequence is a data sequence of a first AI model, the second data sequence is a data sequence of a second AI model, and generation time of the first AI model at the application layer is earlier than generation time of the second AI model. For example, the first AI model is used to compress an image in a scenario 1 (a cartoon scenario), and the second AI model is used to compress an image in a scenario 2 (a real person scenario). The terminal first enables the scenario 1, generates the first AI model, and then switches to the scenario 2. In this case, the terminal generates the second AI model.

Manner 2: Time at which the first data packet arrives at the access layer is earlier than time at which the second data packet arrives at the access layer. Manner 1 and Manner 2 may be in a combined relationship, or may be two independent branches. For example, if time at which the first data packet is generated by the application layer is earlier than time at which the second data packet is generated by the application layer, the time at which the first data packet arrives at the access layer is also earlier than the time at which the second data packet arrives at the access layer. For another example, time at which the first data packet is generated by the application layer is equal to or later than time at which the second data packet is generated by the application layer, but time at which the first data packet arrives at the access layer is also earlier than time at which the second data packet arrives at the access layer.

Manner 3: The first data packet and the second data packet are respectively data packets in different services or different scenarios, a scenario corresponding to the first data packet is a previous scenario, and a scenario corresponding to the second data packet is a subsequent scenario. The scenarios correspond to different application maps. For example, a scenario 1 is a forest scenario, and a scenario 2 is an ocean scenario. For another example, a scenario 1 is a combat mode, and a scenario 2 is a walking mode.

S203: The access layer discards the first data packet based on the second data packet.

Specifically, discarding the first data packet may be understood as that the access layer no longer transmits the first data packet. For example, cache of the first data packet is not cleared, but the first data packet is no longer transmitted. For another example, the first data packet is no longer transmitted and cache of the first data packet is cleared. A specific operation of discarding the first data packet may be that the access layer considers that a discard timer of the first data packet expires, and then discards the first data packet.

Because a data packet may be carried in a DRB, discarding the first data packet may also be understood as resetting a DRB that carries the first data packet. Resetting the DRB of the first data packet may also be understood as clearing all data packets in the DRB that carries the first data packet. In this application, resetting the DRB that carries the first data packet may be resetting a status variable related to the DRB to zero after all data in the DRB to which the first data packet is mapped is cleared. The status variable is, for example, a transmission window variable.

In a possible manner, if the first data packet includes data that has been processed through the DRB and data that has not been processed through the DRB, discarding the first data packet in this application is specifically discarding the data that has not been processed through the DRB and the data that has been processed through the DRB in the first data packet. The data that has been processed through the DRB in this application may be understood as that a packet header of a data link layer has been added to the data. Alternatively, the data that has not been processed through the DRB in the first data packet is discarded, and the data that has been processed through the DRB may continue to be sent.

In this application, that the access layer discards the first data packet based on the second data packet may be that the access layer identifies, based on a packet header of the second data packet, that the first data packet is to be discarded, or identifies, based on a QoS flow corresponding to the second data packet, that a new data sequence arrives. The following provides a possible implementation of how to trigger the access layer to discard the first data packet based on the second data packet. It should be noted that a specific form in the following example may replace the foregoing case in which the access layer discards the first data packet based on the second data packet.

Manner A: The access layer discards the second data packet based on a fact that the second data packet is different from the first data packet. In a possible manner, when the first data packet is earlier than the second data packet, if the access layer receives the second data packet and identifies that the second data packet is a new data packet, the access layer discards the previous data packet, that is, discards the first data packet. In a possible scenario, the application layer generates, for the scenario 1, a group of data packets that are logically associated as the first data sequence, where the group of data packets includes the first data packet. In this case, a data sequence to which data included in the first data packet belongs is the first data sequence. In a process in which the application layer sends the first data packet to the access layer, a scenario handover occurs on a user. The application layer generates, for the scenario 2, a group of data packets that are logically associated as the second data sequence, where the group of data packets includes the second data packet. In this case, a data sequence to which data included in the second data packet belongs is the second data sequence. For the access layer, the access layer identifies that the second data sequence to which the data in the received second data packet belongs is different from the first data sequence to which the data in the first data packet belongs, or the access layer identifies that the second data sequence is a new sequence, and the access layer discards the first data packet, and no longer transmits the first data packet.

Manner B: The second data packet carries first indication information, the first indication information indicates the second data sequence, and the access layer discards the first data packet based on the first indication information. For example, the first indication information indicates a sequence number of the second data sequence.

In a possible manner, each data packet carries an indication of a data sequence to which data included in the data packet belongs, and the application layer may determine, based on indications of data sequences that are carried in two data packets, whether a new data packet arrives. For example, the data of the first data sequence includes a data packet 1 to a data packet 10, and a sequence number of the first data sequence is 10. Each of the data packet 1 to the data packet 10 carries the sequence number 10 of the data sequence. The data of the second data sequence includes a data packet 11 to a data packet 30, and a sequence number of the second data sequence is 11. In other words, each of the data packet 11 to the data packet 30 carries the sequence number 11 of the data sequence. The data packet 1 to the data packet 10 have been sent to the access layer. The access layer receives the data packet 11, and identifies that the sequence number 11 of the data sequence that is carried in the second data packet is different from the sequence number 10 of the data sequence that is carried in the data packet 1 to the data packet 10. The access layer discards the first data packet. For example, the access layer clears the first data packet as a data packet that is in the data packet 1 to the data packet 10 and that has not been sent by the access layer. Alternatively, the access layer no longer sends the first data packet as a data packet that is in the data packet 1 to the data packet 10 and that has not been sent by the access layer, but does not clear the data packet that is in the data packet 1 to the data packet 10 and that has not been sent by the access layer.

In another possible manner, it is not restricted that each data packet carries an indication of a data sequence to which data included in the data packet belongs, but the second data packet carries first indication information, where the first indication information indicates that the second data sequence is a new data sequence or is a start of a new data sequence. For example, data of the first data sequence includes a data packet 1 to a data packet 10, and a sequence number of the first data sequence is 10. Data of the second data sequence includes a data packet 11 to a data packet 30, and a sequence number of the second data sequence is 11. The data packet 1 to the data packet 10 have been sent to the access layer, and the application layer adds the sequence number 11 to the data packet 11. The access layer receives the data packet 11, and identifies that the second data packet carries the sequence number 11 of the data sequence, so as to learn that a data packet of a new data sequence arrives. In this case, the access layer discards the first data packet. In this case, the first data packet is a data packet that is in the data packet 1 to the data packet 10 and that has not been sent by the access layer. For example, the access layer clears the first data packet as the data packet that is in the data packet 1 to the data packet 10 and that has not been sent by the access layer. Alternatively, the access layer no longer sends the first data packet as a data packet that is in the data packet 1 to the data packet 10 and that has not been sent by the access layer, but does not clear the data packet that is in the data packet 1 to the data packet 10 and that has not been sent by the access layer.

Manner C: The second data packet carries second indication information, and the second indication information indicates to discard the first data packet. In other words, the second data packet includes indication information indicating that the first data packet needs to be discarded. In a possible manner, the second indication information indicates the first data sequence, and the access layer discards the first data packet based on the first data sequence. For example, the first indication information may indicate a sequence identifier of the first data sequence. In a possible scenario, the application layer generates a group of data under a specific object (for example, a picture, an AI model, 3D model data, or a file), and sends a series of data packets of the group of data to the access layer. However, in a sending process, the user cancels sending of the object. In this case, the group of data is also invalid. The application layer may add second indication information to a specific data packet, or the application layer generates a data packet that includes data that does not belong to the first group of data and that carries the second indication information. The second indication information may also be understood as a discard indication. In this scenario, a group of data packets of a specific object is canceled by the user for sending, but there may be no generation of a data packet of a new model. In this case, data in the first data packet and the second data packet belongs to a same data sequence, or data included in the second data packet does not belong to a data sequence to which data included in the first data packet belongs. Therefore, the second data packet needs to carry the second indication information, so that the access layer is enabled to trigger the access layer to discard the first data packet based on the second indication information. For example, the terminal intends to send a photo to the access network device. The application layer generates 100 data packets for the photo, which are respectively a data packet 1 to a data packet 100. After the application layer sends the data packet 1 to the data packet 50 to the access layer, the user cancels sending of the photo. In this case, the application layer may add the first indication information to the data packet 51, to trigger the access layer to discard a data packet that is not sent in the data packet 1 to the data packet 50. That is, the data packet 51 is the second data packet, and the data packet that is not sent in the data packet 1 to the data packet 50 is the first data packet. Alternatively, the application layer may generate a new data packet 101 outside the data packet 1 to the data packet 100, and add the second indication information to the data packet 101. The access layer receives the data packet 101, and discards the data packet that is not sent in the data packet 1 to the data packet 50. That is, the data packet 101 is the second data packet, that is, the data packet 51 is the second data packet, and the data packet that is not sent in the data packet 1 to the data packet 50 is the first data packet.

Manner D: The first data packet belongs to a first QoS flow, the second data packet belongs to a second QoS flow, and that the access layer discards the first data packet based on the second data packet is specifically: The access layer clears the first data packet of the first QoS flow based on arrival of the data packet of the second QoS flow. Specifically, clearing the first data packet of the first QoS flow may include: clearing all data packets that are not transmitted in a corresponding DRB of the first QoS flow, or clearing a data packet that is to be processed at a data link layer in the first QoS flow. In a possible manner, the first QoS flow is associated with the second QoS flow. The access layer receives the second data packet, and discards one or more data packets in the first QoS flow by using the second QoS flow to which the second data packet belongs and the association between the first QoS flow and the second QoS flow. The one or more data packets in the first QoS flow include the first data packet. For example, the association relationship between the first QoS flow and the second QoS flow is that the first QoS flow and the second QoS flow are in a mutual clearance relationship. In this application, that the two QoS flows are in the mutual clearance relationship may also be understood as that the access layer clears a data packet of the other QoS flow after a data packet of one QoS flow arrives. The association relationship between the first QoS flow and the second QoS flow may be predefined or may be configured. When the association relationship between the first QoS flow and the second QoS flow is configured, the method shown in FIG. 2 further includes: The access layer receives first configuration information, where the first configuration information indicates that the first QoS flow and the second QoS flow are in a mutual clearance relationship. The following table is an example of the first configuration information. The first configuration information may be sent by a core network or sent by an access network device.

**Table 1**

| | |
|---|---|
| First QoS flow | Second QoS flow |
| Third QoS flow | Fourth QoS flow |
| Fifth QoS flow | Sixth QoS flow |

In Table 1, a plurality of QoS flows that are in a mutual clearance relationship are configured via the first configuration information. The access layer receives the first configuration information, and can obtain the first QoS flow by querying a table based on the second QoS flow and Table 1, so as to clear the first data packet in the first QoS flow.

In the foregoing manner A to manner D, how the access layer determines the first data packet based on the second data packet is described from content of the second data packet. In a possible manner, that the access layer in this application discards the first data packet based on the second data packet may also be reflected from a perspective of time at which the access layer receives the second data packet. For detailed description, a manner E is provided.

Manner E: That the access layer discards the first data packet based on the second data packet is specifically: The access layer discards the first data packet based on a time interval between time at which the second data packet arrives at the access layer and time at which the first data packet arrives at the access layer is greater than a threshold. In this manner, if the time interval between the time at which the access layer receives the new data packet and the time at which the previous data packet is received is large, the access layer may discard the previous data packet. This manner is provided because data of a same data sequence is usually generated by the application layer at the same time and then sent to the access layer. Time of arrival at the access layer is continuous. If there is a time interval between two data packets, it is highly possible that the two data packets belong to different data sequences.

In a possible embodiment, the method shown in FIG. 2 further includes: The access layer receives first information, where the first information indicates that the access layer is allowed to discard the first data packet based on the second data packet. The first information may be sent by the access network device, or may be sent by the core network. In this manner, whether the access layer needs to discard the first data packet based on the second data packet may be used as a configurable feature, for example, configured by the access network device or the core network, thereby improving flexibility of processing the data packet by the terminal. The first information is interpreted differently in different manners. For example, for the foregoing manners A and B, the first information may be understood as indicating that the access layer is allowed to identify and receive a new data packet, so as to discard an old data packet. For the foregoing manner C, the first information may be understood as indicating that the access layer is allowed to discard the first data packet based on the second indication information in the second data packet. For the foregoing manner D, the first information may be understood as indicating that the previous data sequence can be cleared when a subsequent data sequence of the QoS flow arrives. For the foregoing manner E, the first information may be understood as allowing the access layer to discard the first data packet when the time interval between the time at which the second data packet arrives at the access layer and the time at which the first data packet arrives at the access layer is greater than a threshold.

In a possible manner, the access layer may further receive second information, where the second information is from an application layer of the terminal, and the second information is used to trigger the access layer to discard the first data packet based on the second data packet. A difference between the first information and the second information is that the first information is used to allow the terminal or allow the access layer to enable the capability of discarding the first data based on the second data, and the second information is used to actually trigger the terminal or the access layer to perform the behavior of discarding the first data packet based on the second data packet. For example, the first information is carried in semi-statically configured signaling, and the second information is carried in a data packet, so that whether to trigger the previous data sequence is separately determined for each data sequence. Specifically, the access network device or the core network configures, via the first information, that the terminal is allowed to discard the second data packet based on the first data packet in a long period. The application layer of the terminal triggers, in real time via the second information, the access layer to discard the first data packet based on the second data packet.

FIG. 3 is a diagram of a communication method according to this application. FIG. 3 is for downlink transmission, and FIG. 3 includes steps S301 to S303. For downlink transmission, the access network device performs a corresponding function of the access layer in FIG. 2, and the core network or the server performs a corresponding function of the application layer in FIG. 2. The following uses interaction between the access network device and the core network as an example for description.

S301: The core network device sends a first data packet to the access network device, and correspondingly, the access network device receives the first data packet.

For a description of the first data packet, refer to S201 in FIG. 2. Details are not described again.

S302: The core network sends a second data packet to the access network device, and correspondingly, the access network device receives the second data packet.

For a description of the second data packet, refer to S202 in FIG. 2. Details are not described again.

In a possible manner, the first data packet is earlier than the second data packet. Similar to the manner 1 in FIG. 2, that the first data packet is earlier than the second data packet may be that time at which the core network or the server generates the first data sequence is earlier than time at which the second data sequence is generated. Similar to the manner 2 in FIG. 2, that the first data packet is earlier than the second data packet may be that time at which the access network device receives the first data sequence is earlier than time at which the access network device receives the second data sequence. Similar to the manner 3 in FIG. 2, the first data packet and the second data packet are data packets in different services or different scenarios.

S303: The access network device discards the first data packet based on the second data packet.

Specifically, a specific operation of discarding the first data packet by the access network device may be that the access network device considers that a discard timer of the first data packet expires, and further triggers discarding of the first data packet. Because the data packet may be carried in a DRB, discarding the first data packet may also be understood as that the access network device resets the DRB carrying the first data packet, so as to clear all data packets in the DRB carrying the first data packet. For how the access network device discards the first data packet based on the second data packet, refer to S203 in FIG. 2. Details are not described again.

In a possible embodiment, the method shown in FIG. 3 further includes: The access network device receives first configuration information sent by the core network, where the first configuration information indicates that the first QoS flow and the second QoS flow are in a mutual clearance relationship.

In a possible embodiment, the method shown in FIG. 3 further includes: The access network device receives configuration information of a QoS flow that is sent by the core network, where the configuration information indicates that a previous data sequence can be cleared when a subsequent data sequence of the QoS flow arrives.

In a possible embodiment, the method shown in FIG. 3 further includes: The access network device receives first information sent by the core network, where the first information indicates that the access network device is allowed to discard the first data packet based on the second data packet.

It may be understood that, to implement functions in the foregoing embodiments, the access network device and the terminal include corresponding hardware structures and/or software modules for performing the functions. A person skilled in the art should be easily aware that, in this application, the units and method steps in the examples described with reference to embodiments disclosed in this application can be implemented in a form of hardware or a combination of hardware and computer software. Whether a function is performed by hardware or hardware driven by computer software depends on particular application scenarios and design constraints of the technical solutions.

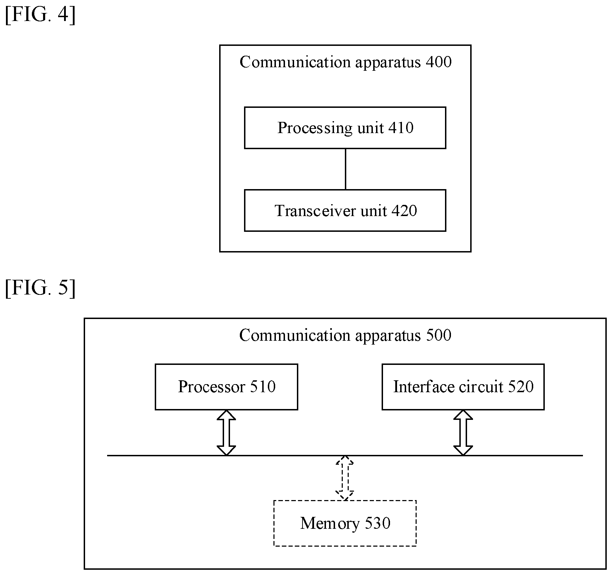

FIG. 4 and FIG. 5 are diagrams of structures of possible communication apparatuses according to embodiments of this application. These communication apparatuses may be configured to implement functions of the terminal or the access network device in the foregoing method embodiments, and therefore can also implement beneficial effects of the foregoing method embodiments. In this embodiment of this application, the communication apparatus may be the terminal 120 shown in FIG. 1, or may be the access network device 110 shown in FIG. 1, or may be a module (for example, a chip) used in the terminal or the access network device.

As shown in FIG. 4, a communication apparatus 400 includes a processing unit 410 and a transceiver unit 420. The communication apparatus 400 is configured to implement functions of the terminal or the access network device in the method embodiments shown in FIG. 2 and FIG. 3.

When the communication apparatus 400 is configured to implement the functions of the terminal in the method embodiment shown in FIG. 2, the transceiver unit 420 is configured to perform the related functions of the access layer in FIG. 2, and the processing unit 410 is configured to perform the related functions of the application layer.

In a possible manner, the processing unit 410 sends the first data packet and the second data packet to the transceiver unit 420, and the transceiver unit 420 discards the first data packet based on the second data packet. In a possible manner, the transceiver unit 420 receives first configuration information, where the first configuration information indicates that the first QoS flow and the second QoS flow are in a mutual clearance relationship.

In a possible manner, the transceiver unit 420 receives first information, where the first information indicates that the communication apparatus 400 is allowed to discard the first data packet based on the second data packet.

In a possible manner, the transceiver unit 420 receives second information, where the second information is used to trigger the transceiver unit 420 to discard the first data packet based on the second data packet.

When the communication apparatus 400 is configured to implement the functions of the access network device or the core network in the method embodiment shown in FIG. 2, optionally, the communication apparatus 400 may not include the processing unit 410. In a possible implementation, the transceiver unit 420 is configured to send first configuration information. The first configuration information indicates that the first QoS flow and the second QoS flow are in a mutual clearance relationship. Further, in a possible manner, the transceiver unit 420 is configured to send first information, where the first information indicates that the terminal is allowed to discard the first data packet based on the second data packet.

When the communication apparatus 400 is configured to implement the functions of the access network device in the method embodiment shown in FIG. 3, optionally, the communication apparatus 400 may not include the processing unit 410.

In a possible manner, the transceiver unit 410 receives the first data packet and the second data packet.

In a possible manner, the transceiver unit 410 discards the first data packet based on the second data packet.

In a possible manner, the transceiver unit 420 receives first configuration information, where the first configuration information indicates that the first QoS flow and the second QoS flow are in a mutual clearance relationship.

In a possible manner, the transceiver unit 420 receives first information, where the first information indicates that the communication apparatus 400 is allowed to discard the first data packet based on the second data packet.

In a possible manner, the transceiver unit 420 receives second information, where the second information is used to trigger the transceiver unit 420 to discard the first data packet based on the second data packet.

When the communication apparatus 400 is configured to implement the functions of the core network device or the server in the method embodiment shown in FIG. 3, optionally, the communication apparatus 400 may not include the processing unit 410.

In a possible manner, the transceiver unit 410 sends the first data packet and the second data packet.

In a possible manner, the transceiver unit 410 sends first configuration information, where the first configuration information indicates that the first QoS flow and the second QoS flow are in a mutual clearance relationship.

In a possible manner, the transceiver unit 410 sends first information, where the first information indicates that the access network device is allowed to discard the first data packet based on the second data packet.

As shown in FIG. 5, a communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the method shown in FIG. 12, the processor 510 is configured to implement the functions of the processing unit 410, and the interface circuit 520 is configured to implement the functions of the transceiver unit 420.

When the communication apparatus is a chip used in a terminal, the chip in the terminal implements a function of the terminal in the foregoing method embodiments. That the chip in the terminal receives information from an access network device may be understood as that the information is first received by another module (for example, a radio frequency module or an antenna) in the terminal, and then sent by the module to the chip in the terminal. That the chip in the terminal sends information to an access network device may be understood as that the information is first sent to another module (for example, a radio frequency module or an antenna) in the terminal, and then sent by the module to the access network device.

When the communication apparatus is a chip used in an access network device, the chip in the access network device implements a function of the access network device in the foregoing method embodiments. That the chip in the access network device receives information from the terminal may be understood as that the information is first received by another module (for example, a radio frequency module or an antenna) in the access network device, and then sent by these modules to the chip in the access network device. That the chip in the access network device sends information to a terminal may be understood as that the information is delivered to another module (for example, a radio frequency module or an antenna) in the access network device, and then sent by these modules to the terminal.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information interaction between a RAN node and a terminal, for example, information interaction between an access network device and a terminal. Information sending and receiving may also be information interaction between two RAN nodes, for example, information interaction between a CU and a DU. Information sending and receiving may also be information interaction between different modules in one apparatus, for example, information interaction between a terminal chip and another module in the terminal, or information interaction between the chip in the access network device and another module in the access network device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logical device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal. Certainly, the processor and the storage medium may exist in the access network device or the terminal as discrete components.

All or some of the foregoing embodiments may be implemented by using software, hardware, firmware, or any combination thereof. When the software is used for implementation, some or all of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. The term "and/or" describes an association relationship between associated objects and may represent that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a first data packet;
receiving a second data packet; and
discarding the first data packet based on the second data packet.

2. The method according to claim 1, wherein data comprised in the first data packet belongs to a first data sequence, data comprised in the second data packet belongs to a second data sequence, and discarding the first data packet based on the second data packet is specifically: discarding the first data packet based on a fact that the second data sequence is different from the first data sequence.

3. The method according to claim 1, wherein the second data packet carries first indication information, the first indication information indicates that a data sequence of data in the second data packet is a second data sequence, data comprised in the first data packet belongs to a first data sequence, and the second data sequence is different from the first data sequence.

4. The method according to claim 1, wherein discarding the first data packet based on the second data packet comprises: carrying, by the second data packet, second indication information, wherein the second indication information indicates to discard the first data packet, and discarding the first data packet based on the second indication information.

5. The method according to claim 4, wherein data comprised in the first data packet belongs to a first data sequence, data comprised in the second data packet belongs to a second data sequence, the second indication information indicates the first data sequence, and the first data packet is discarded based on the second indication information.

6. The method according to claim 5, wherein the second indication information indicates a sequence identifier of the first data sequence.

7. The method according to any one of claims 1 to 6, wherein the method further comprises: receiving first information, wherein the first information indicates that the first data packet is allowed to be discarded based on the second data packet.

8. The method according to claim 1, wherein the first data packet belongs to a first QoS flow, the second data packet belongs to a second QoS flow, and discarding the first data packet based on the second data packet is specifically: clearing the first data packet of the first QoS flow based on the second QoS flow.

9. The method according to claim 8, wherein the first QoS flow is associated with the second QoS flow.

10. The method according to claim 8 or 9, wherein the method further comprises: receiving first configuration information, wherein the first configuration information indicates that the first QoS flow and the second QoS flow are in a mutual clearance relationship.

11. The method according to any one of claims 8 to 10, wherein the first QoS flow and the second QoS flow are respectively mapped to different DRBs.

12. The method according to any one of claims 1 to 11, wherein discarding the first data packet based on the second data packet is specifically: discarding the first data packet when a time interval between an arrival time of the second data packet and an arrival time of the first data packet is greater than a threshold.

13. The method according to any one of claims 1 to 12, wherein the first data packet comprises data that has been processed through a DRB and data that has not been processed through the DRB, and discarding the first data packet is specifically: discarding the data that has not been processed through the DRB in the first data packet.

14. The method according to any one of claims 1 to 13, wherein discarding the first data packet based on the second data packet comprises: determining, based on the second data packet, that a discard timer of the first data packet expires, and discarding the first data packet, or discarding, based on the second data packet, all data of a data radio bearer DRB to which the first data packet is mapped.

15. The method according to any one of claims 1 to 14, wherein time at which the first data packet arrives at an access layer is earlier than that of the second data packet, or generation time of the data comprised in the first data packet is earlier than generation time of the data comprised in the second data packet.

16. The method according to any one of claims 1 to 15, wherein the first communication apparatus is a terminal device or an access network device.

17. A communication apparatus, comprising a unit or a module configured to perform the method according to any one of claims 1 to 16.

18. A computer-readable storage medium, wherein the computer-readable storage medium stores a computer program or instructions; and when the computer program or the instructions are executed by a communication apparatus, the method according to any one of claims 1 to 16 is performed.

19. A computer program product, wherein when the computer program product runs on a computer, the computer is enabled to perform the method according to any one of claims 1 to 16.
